# EUROPEAN PATENT SPECIFICATION

(11) **EP 2 976 829 B1**
(45) Date of publication and mention of the grant of the patent: **18.01.2017**
(21) Application number: 13763034.9
(22) Date of filing: 12.09.2013
(51) Int. Cl.: H02K 7/18, H02K 9/04, F03D 80/00

(54) **COOLING SYSTEM**
LUFTSTRÖMUNGSKONTROLLANORDNUNG
AGENCEMENT DE COMMANDE D'ÉCOULEMENT D'AIR

(30) Priority: 22.05.2013 EP 13168761
(43) Date of publication of application: 27.01.2016
(73) Proprietor: Siemens Aktiengesellschaft, 80333 München (DE)
(72) Inventor: ERIKSEN, Uffe, DK-8700 Horsens (DK); GUNDTOFT, Soeren, DK-7000 Fredericia (DK); MUNK-HANSEN, Thorkil, DK-7323 Give (DK); THYGESEN, Claus, DK-8670 Låsby (DK)
(86) International application number: PCT/EP2013/068943
(87) International publication number: WO 2014/187507

(56) References cited:
- EP-A1- 2 182 618
- EP-A1- 2 306 010
- EP-A1- 2 472 108
- EP-A2- 1 586 769
- EP-A2- 2 136 077
- EP-A2- 2 141 360
- WO-A2-2011/048038
- WO-A2-2012/120485

## Description

The invention relates to a wind turbine generator cooling system.

A wind turbine comprises a nacelle that is rotatable arranged on top of a tower. A rotor hub that comprises at least one rotor blade is rotatable attached to the nacelle.

In a direct driven wind turbine the rotor hub is directly coupled to the rotor of an electrical generator. The rotation of the rotor hub is not transferred by a gear.

The electrical generator comprises a stator and a rotor. The stator is attached to the stationary part of the nacelle of the wind turbine. The rotor is arranged rotatable in respect to the stator of the electrical generator.

The wind interacts with the rotor blade so that the rotor hub and the rotor of the electrical generator rotate.

The generator produces electrical energy. Heat is created in the stator and the rotor of the electrical generator due to eddy currents and losses. This excess heat can become so intense that parts of the generator get damaged. Thus, the generator needs to be cooled.

Several concepts to cool the generator are known.

It is known from EP 1218638 A1 and US 8047774 B2 to cool the generator with a first cooling fluid and transfer the heat to a second cooling fluid by the use of a heat exchanger.

This shows the disadvantage that two cooling circuits with pumps and a heat exchanger are used. Cooling systems like these use a lot of electrical energy for the cooling operation.

EP 2141360 A2 discloses a wind turbine with a tower and a nacelle with a generator. The generator comprises a stator, a rotor and a fan. The nacelle is divided into a front part and a rear part by the generator, the front part and the rear part of the nacelle are connected by the air gap of the generator, wherein the fan is blowing air from the rear part of the nacelle through the air gap to the front part of the nacelle. The air is sucked in through an opening in the nacelle and is cooling the generator.

WO 2011/048038 A2 describes a generator, wherein the generator comprises a stationary stator and a rotor disposed rotatably about an axis of rotation, wherein the stator comprises a fan drawing air from the ambient air around the generator, wherein the inlet channel is disposed such that the air drawn in by the fan is distributed at the core of the stator by the channel over the length of the core in the direction of the axis of rotation, wherein cooling channels running in the circumferential direction of the core and distributed over the length of the core are disposed on the core, wherein the stator comprises an outlet channel disposed offset in the circumferential direction of the core with respect to the inlet channel, wherein the inlet channel is connected to the outlet channel by means of the cooling channels, such that the air from the inlet channels flows through the cooling channels into the outlet channel.

This shows the disadvantage, that the generator divides the nacelle in a front part and a back part, and that the cooling air passes the air gap in the generator from the back part to the front part. Thus an exit for the warm air has to be provided in the front part of the nacelle, to allow the air to exit the wind turbine. Thus both sides of the generator are needed for additional the connection of the cooling system to the generator or for additional installations of the cooling system, like fans.

EP 1586769 A2 describes a nacelle of a wind turbine, with a generator moved by the rotor of the wind turbine without the use of a gearbox, and means to guide the air flow of air cooling the generator. The stator of the generator comprises one or more channels to guide the cooling air flow through the generator. Preferably, a channel is at least one slot in radial and circumferential direction that opens towards the air gap between the rotor and the stator of the generator.

The aim of the invention is therefore to provide an improved generator cooling system.

The object of the invention is achieved by the independent claim 1. Further features of the invention are disclosed in the dependant claims.

A wind turbine generator cooling system for a direct driven wind turbine is disclosed, whereby the electrical generator comprises a stator, a rotor, and an air gap between the stator and the rotor, and the rotor is rotatable in respect to the stator around an axis of rotation.

The generator comprises a cavity that is abutting on the stator in a radial direction, whereby a fan is connected to the cavity, so that the fan moves air through the cavity to cool the generator.

A duct extends through the cavity in a mainly axial direction from a first side of the generator to a second side of the generator to allow the air that moves through the cavity, that cools the generator, and that collects at least partially at the first side of the generator, to flow from the first side of the generator to the second side of the generator to exit the generator.

The wind turbine generator cooling system for a direct driven wind turbine cools the generator of the wind turbine using air as the cooling medium. Air is available in and around a wind turbine to be used as a cooling medium.

Thus, no additional cooling medium has to be provided. In addition air as a cooling medium does not cause a problem when a leakage occurs.

The generator of the wind turbine comprises a rotor and a stator. An air gap is defined between the rotor and the stator of the electrical generator. The rotor is arranged rotatable in respect to the stator around an axis of rotation.

The generator comprises a certain expansion along the axis of rotation, thus a certain axial length. The rotor and the stator have a certain distance from the axis of rotation, thus they have a certain radius.

During the operation of the wind turbine and thus during the generation of electrical energy heat is generated in the rotor and the stator in the vicinity of the air gap.

Thus, the stator and the rotor increase in temperature due to the excess heat. During the operation of the wind turbine the excess heat has to be removed by a cooling system.

The generator comprises a cavity. The cavity is directly abutting on the stator, thus it is in direct contact with the stator. The cavity is abutting on the stator in a radial direction. In the case of an outer rotor generator the cavity is abutting radially inward of the stator. In the case of an inner rotor generator the cavity is abuting on the stator radially outward of the stator.

Thus the cavity does not interfere with the air gap or the rotor of the generator.

A fan is connected to the cavity. The fan moves air through the cavity to cool the generator. The fan moves the air through the cavity either by sucking the air through the cavity or by blowing the air into the cavity.

Thus air moves through the cavity. The air is used to cool the generator of the wind turbine. Thus the cavity is a part of the cooling system of the generator. The temperature of the air moving through the cavity increases as the air cools the generator. The warm air is then released from the generator.

Thus the generator is cooled by the air.

The air enters the cavity at a first opening, also called an air inlet, and exits the cavity at a second opening. The air that moves through the cavity at least partially collects at a first side of the generator. The first side of the generator is at one of the axial ends of the generator.

A duct extends through the cavity. The duct leads through the cavity in a mainly axial direction from a first side of the generator to a second side of the generator. The duct allows air to flow from the first side of the generator to the second side of the generator. There the air can exit the generator.

The air moves through the cavity, cools the generator, and collects at least partially at the first side of the generator. The warm air that picked up the heat of the generator flows through the duct in the cavity to the other side of the generator without mixing with the air in the cavity, or nearly without increasing the temperature of the air inside the cavity.

The air flows through the duct to the second side of the generator and exits the generator there.

Thus the fan that moves the air through the cavity, and the air exit of the generator are arranged at the same side of the generator.

Thus only one side of the generator is used to connect the cooling system to the generator. Thus the other side is not used for the cooling system. The other side is closed by a cover to avoid wind, rain, and aerosols to enter the generator of the wind turbine.

In addition, the closed side of the generator can be used to connect the rotor of the wind turbine to the generator, whereby an interference with connections of the cooling system with the rotor of the wind turbine is avoided.

The cavity comprises a first wall to separate the interior of the cavity from a first side of the generator, and a second wall to separate the interior of the cavity from a second side of the generator. The first wall and the second wall define the axial ends of the cavity, and the duct extends through the interior of the cavity from an opening in the first wall of the cavity to an opening in the second wall of the cavity.

The ends of the cavity are closed by a wall each. The walls separate the cavity form the first side and from the second side of the generator. The walls define the axial end of the cavity. The first side and the second side of the generator are axial sides of the generator.

The first end of the cavity is closed by a wall. The wall comprises an opening. A first end of the duct is connected to the opening in the wall of the first end of the cavity.

The second end of the cavity comprises a wall. The wall comprises an opening and the second end of the duct is connected to the opening in the wall of the second end of the cavity.

Thus, the duct connects the first side of the generator with the second side of the generator in a way that air can flow through the duct from the first side of the generator to the second side of the generator. The air within the duct is separated from the air in the cavity and will not mix with the air in the cavity.

Thus the warm air that carries the heat of the generator can be transported through the cavity separated from the cool air in the cavity.

Thus the connection to an air inlet into the cavity and the connection to allow air to exit the generator are arranged at the same side of the generator. Thus the connection is easier to establish and easier to reach by personnel for service purpose.

In addition, one side of the generator is free of connections of the cooling system. Thus the side free of connection scan be closed by a cover of a housing. Thus one side of the generator protected to prevent, that wind, aerosols and water can enter the generator.

Wind, aerosols, and water can cause damage in the generator due to abrasion and corrosion. Thus one side of the generator is protected against damage.

The stator of the generator is connected to a stationary part of the wind turbine. The stator is arranged with a certain radial distance to the stationary part. The stator is connected to the stationary part by a wall on each axial side of the stator. The stator, the stationary part, and the walls define a cavity. This cavity is used as the cavity for the cooling system, to move air through the cavity.

The stator comprises a plurality of ducts that connect the cavity with the air gap in a way that the air from the cavity flows into the air gap, and along the air gap to the first side and to the second side of the generator.

The stator comprises a plurality of ducts that connect the cavity with the air gap in a way that the air present in the cavity can flow through the plurality of ducts into the air gap of the generator.

Thus, the air is moved by the fan into the cavity and through the plurality of ducts into the air gap of the electrical generator. The air flows along the air gap of the electrical generator and cools the stator and the rotor of the generator.

The plurality of ducts in the stator of the generator are openings leading through the lamination package of the stator. These openings can be gaps between stacks of lamination plates of the stator.

The excess heat is present in the air gap and in the parts of the rotor and stator adjacent to the air gap.

Thus, the cool air from the cavity flows along the air gap and cools the stator and the rotor of the electrical generator. Thus, excess heat is removed from the generator during the operation of the wind turbine.

The cool air from the cavity flows through a plurality of ducts into the air gap.

Thus, the cooling air enters the air gap in different places.
Thus, the cooling air is equally distributed in the air gap.
Thus, the cooling effect within the air gap is quite equalized.

The cool air from the cavity is equally distributed in the air gap and thus, the cooling effect along the surface of the rotor and the stator is equalized. Thus, no hot spots along the surface of the rotor and the stator in the generator can develop.

Thus, the cooling of the generator is optimized.

The air flows along the air gap in both directions to exit the air gap at the first side and the second side of the generator. The first side and the second side are axial ends of the generator.

Thus, the warm air carries the excess heat out of the generator into both axial directions towards the sides of the generator. Thus, the way of the air moving through the air gap is minimized. Thus, the cooling effect of the cooling system is optimized.

The air exiting the air gap at the first side of the generator flows through the duct from the first side to the second side of the generator. There the air from the first side meets the air that exits the air gap at the second side of the generator.

Thus, the duct allows the air to flow back from the first side to the second side so that the air flows following the two directions of the air gap can be combined and can exit the wind turbine together through one exit.

Thus, only one exit from the wind turbine for the warm air has to be provided.

The exit used by the warm air to flow out of the wind turbine is problematic in the sense of rain and humidity can enter the wind turbine through the exit when the wind turbine is not in operation. Rain water and humidity are problematic for mechanical and electrical components in the wind turbine. Due to the arrangement described, one exit out of the wind turbine can be avoided.

Thus, one opening in the wind turbine can be avoided. Thus, one possibility for rain and humidity to enter the wind turbine is avoided. Thus, problems for the mechanical and electrical components in the wind turbine due to humidity and rain water are minimized.

The air flows along the air gap in two axial directions. The air exits the air gap at two axial ends of the generator. At the axial ends of the generator stator, the air flows through the winding overhang of the windings of the stator. The winding overhangs produce excess heat during operation and need to be cooled.

Thus the air from the air gap cools the winding overhang of the stator windings.

The rotor is arranged radially outward of the stator and the stator is attached to a main shaft of the wind turbine and the cavity is arranged between the stator and the main shaft.

The rotor of the generator is arranged rotatable in respect to the stator outside of the stator. Thus the generator comprises an outer rotor.

The stator of the electrical generator is connected to a main shaft. The main shaft is connected to the nacelle of the wind turbine. The stator is arranged radially outward of the main shaft. The stator is connected to the main shaft by two walls, one at each axial end of the stator.

A cavity is defined between the stator and the main shaft and the two walls that support the stator in respect to the main shaft.

This hollow space between the stator and the main shaft is used as a cavity for the described cooling system. Thus, the space between the stator and the main shaft is a part of the cooling system so that air can move through the cavity to cool the generator.

Thus a hollow space already present in the wind turbine is used as a cavity for the cooling system at the stator. Thus, no additional space is needed for the cavity.

In addition no additional installation is needed to form a cavity within the generator of the wind turbine. Thus, material and space within the wind turbine is saved.

The wind turbine comprises a nacelle, and the electrical generator is attached to the nacelle. The nacelle comprises a housing. An air outlet connects the interior of the generator to the exterior of the wind turbine. The air outlet is arranged between the nacelle and the rotor of the generator to allow the warm air from inside the generator to exit the wind turbine.

The electrical generator of the wind turbine is attached to the nacelle. The stator of the electrical generator is connected to the stationary part of the wind turbine in the nacelle. The rotor of the electrical generator is connected rotatable in respect to the stator of the generator.

The rotor is rotatable in respect to the stationary part of the wind turbine and thus in respect to the housing of the nacelle. A gap is present between the rotor of the generator and the housing of the nacelle to allow the rotation of the rotor.

The air outlet is arranged within the gap between the nacelle and the rotor of the generator. The warm air from inside the generator exits the wind turbine through the gap between the generator rotor and the housing of the nacelle.

Thus an opening already present in the wind turbine is used to allow the warm air to exit the wind turbine. Thus no additional opening has to be provided. Openings in the housing of the wind turbine are potential entry ports for humidity, rain and particles.

Thus an additional entry port for humidity, rain, and particles can be avoided and the entry of humidity, rain, and particles is limited.

The air outlet comprises a sealing.

The gap between the nacelle and the rotor of the generator is protected by a sealing. This sealing can be a labyrinth sealing for example.

The sealing prevents the entry of humid air and rain into the wind turbine. The area of the gap and the sealing is used to allow the warm air from the generator to exit the wind turbine.

Thus, the entry of humid air and rain from outside of the wind turbine is prevented, while the warm air can exit the wind turbine.

Humid air and rain can cause damage due to corrosion in the wind turbine. Humid air and rain is hindered in entering the wind turbine. Thus damage is prevented.

An air inlet duct is connected to a fan, and a filter is attached to the air inlet duct so that the air is filtered before it is blown into the cavity.

The air is blown by the fan through the air inlet into the cavity. The fan is connected to an air inlet duct and the air inlet duct comprises a filter.

Thus, the air is filtered before it enters the cavity. Thus, the air within the cavity is filtered. Thus, the air flowing through the plurality of ducts into the air gap is filtered.

Thus, no foreign particles flow with the air into the cavity and through the plurality of ducts into the air gap of the generator. Thus, damages caused by foreign particles in the air gap of the generator are avoided.

The filter is an aerosol filter.

Aerosols are particles like pollen, or salt, or dust, or sand for example. Aerosols can cause damage in the generator of the wind turbine due to corrosion and abrasion.

The aerosols are filtered from the air before it enters into the cavity and from there into the air gap of the generator. Thus, damages occurring from aerosols particles like pollen, salt, dust, moisture or sand in the air gap of the generator are avoided.

The nacelle comprises an air inlet for air to enter the nacelle.

The fan moves air from the nacelle into the cavity. Thus air will flow from outside of the wind turbine into the nacelle. Thus, an air inlet needs to be provided to allow air to enter the nacelle.

Thus, controlled entry of air into the nacelle is provided. Thus, the uncontrolled entry of air through gaps in the housing of the nacelle is minimized.

The air inlet to the nacelle comprises a dehumidifier and/or a filter for aerosols.

Aerosols are particles like salt, or sand, or dust, or pollen for example.

Aerosols cause damage in the electrical generator of the wind turbine, by corrosion or abrasion.

The air inlet comprises a filter to filter out the aerosols.

Thus, the amount of salt, sand, dust, moisture or pollen that enters the nacelle together with the air is reduced. Thus, also the amount of salt, sand, moisture or pollen that enters the cavity and the air gap of the generator is reduced.

Thus, damages caused by salt, sand, dust, moisture or pollen in the air gap of the generator are reduced.

The dehumidifier removes water from the air. This includes water in the gaseous phase, like humidity, and water in the liquid phase, like mist, fog, or droplets. A dehumidifier removing mist, fog, or droplets of water from the air is also called a demister.

Humidity and water cause problems and damages in the wind turbine due to corrosion and cause insulation problems. The air entering the nacelle flows through the dehumidifier, and the moisture or humidity in the air is reduced. Thus the level of humidity of the air in the nacelle is reduced.

In addition the level of humidity of the air that is moved by the fan into the cavity and then through the air gap is reduced.

Thus the probability of damages due to humidity and water in the nacelle and the generator is reduced. Thus the lifetime of the generator is increased.

The air inlet of the nacelle is arranged in the back wall of the housing of the nacelle.

The nacelle of the wind turbine shows a front end and a back end. The rotor of the wind turbine is arranged at the front end of the nacelle. The back end of the nacelle is the end of the nacelle pointing away from the front end of the nacelle.

During the operation of the wind turbine the wind advances towards the nacelle of the wind turbine. It flows through the rotor of the wind turbine and then along the nacelle.

Thus the back wall of the nacelle does not experience direct wind pressure during the operation of the wind turbine.

Thus, no air is pushed through the air inlet into the nacelle of the wind turbine by the wind pressure. The air needed for cooling for the generator is sucked through the air inlet at the back of the nacelle by the fan.

The air inlet of the nacelle is arranged at a side of the housing of the nacelle.

The air advancing towards the wind turbine flows through the rotor of the wind turbine and then along the sides of the nacelle.

Thus, the sides of the nacelle do not experience wind pressing against the housing during the operation of the wind turbine. Thus, no air is pushed by the wind into the nacelle of the wind turbine.

The air needed for cooling of the generator is sucked through the air inlet at a side of the nacelle. In addition, the side of the nacelle comprises a large area that is not used otherwise.

Thus, the air inlet is arranged at a side of the nacelle without occupying space needed for other installations and components of the wind turbine.

The plurality of ducts in the stator is arranged in the lamination plates of the generator.

Thus, the air for cooling the generator flows through the lamination plates of the generator and thus cools the lamination plates of the generator.

Thus, the cooling of the generator is enhanced.

The plurality of ducts in the stator are gaps between at least two stacks of lamination plates of the generator.

The lamination plates in the generator are arranged in stacks. Spacers are arranged between the stacks of lamination plates.

Thus, gaps are present between the stacks of lamination plates. These gaps between the stacks of lamination plates can be used as ducts to allow the air from the cavity to flow through the stator of the generator and thus into the air gap of the generator.

The cooling system as described above is used for cooling a generator of a wind turbine.

The invention is shown in more detail by the help of figures. The figures show a preferred configuration and do not limit the scope of the invention.
FIG 1 shows a cooling system of a wind turbine generator,
FIG 2 shows a second embodiment of the cooling system,
FIG 3 shows a third embodiment of the cooling system,
FIG 4 shows an air inlet at the side of the nacelle.

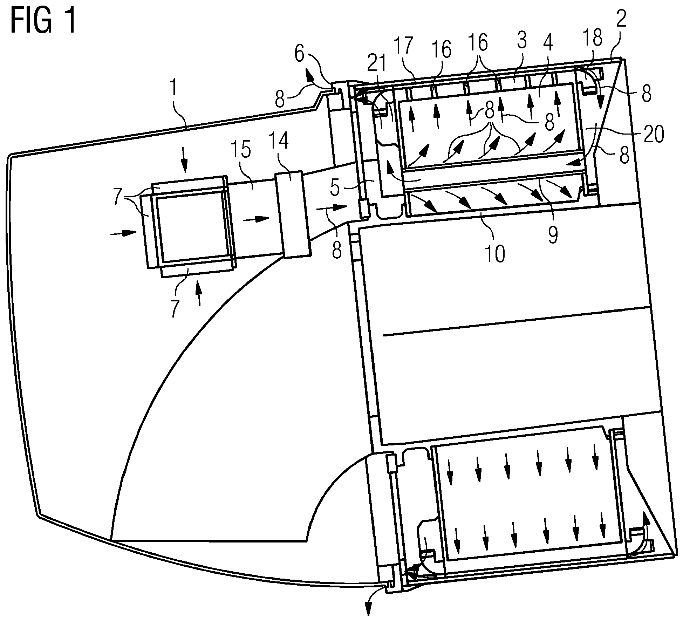

FIG 1 shows a cooling system of a wind turbine generator. The wind turbine comprises a nacelle 1 and a generator. The generator comprises a rotor 2 and a stator 3. An air gap 17 is present between the rotor 2 and the stator 3. The rotor 2 is arranged around the stator 3 of the generator. Thus the rotor 2 is arranged radially outward of the stator 2.

A cavity 4 is abutting on the stator 3. The cavity is arranged radially inward of the stator 3 between the stator 3 and the main shaft 10 of the wind turbine.

The cavity 4 is limited by the stator 3 of the generator at the outer side and by the shaft 10 of the wind turbine at the inner side. The generator comprises a first side 20 and a second side 21. The cavity 4 is mainly closed by a wall to separate the cavity from the first side 20 and at the second side 21 of the generator. The wall at the first side 20 and the second side 21 is arranged mainly radial and connects the stator 3 and the shaft 10.

A fan 14 blows air into the cavity 4. The fan 14 is connected to an air channel 15. The air channel 15 is connected to an air inlet 5 in the wall of the cavity 4. Thus the air flow 8 goes from the fan 14 through the air channel 15 and the air inlet 5 into the cavity 4.

The air flow 8 is leading from the cavity 4 through ducts 16 in the stator 3 into the air gap 17 between the rotor 2 and the stator 3. The air flow 8 is going along the air gap 17 into both directions towards the open end of the air gap 17.

The air flow 8 cools the part of the rotor 2 and the stator 3 adjacent to the air gap 17. At the end of the air gap 17 the air flow 8 flows through the winding overhang 18 and cools the winding overhang 18.

From the winding overhang 18 the air flow 8 is guided to an air outlet 6.

A duct 9 is arranged within the cavity 4. A first end of the duct 9 is connected to the wall at the first side 20 of the generator. The second end of the duct 9 is connected to the wall at the second side 21 of the generator in a way that air from the first side of the generator flows through the duct 9 to the second side 21.

Thus the air flow 8 from the first side 20 flows through the duct 9 and is there combined with the air flow 8 on the second side 21 of the generator.

Thus the duct 9 is used to guide the air flow 8 from one side of the generator to the other side of the generator and to the air outlet 6.

The air outlet 6 is arranged between the rotor 2 of the generator and the housing of the nacelle 1.

The air flow 8 exits the air gap 17 at both sides towards the first side 20 and the second side 21 of the generator. The part of the air flow 8 that leaves the air gap 17 at the first side 21 of the generator flows through the duct 9 towards the second side 21. The air flow 8 recombines at the second side 21 and is then leaving the wind turbine at the air outlet 6 between the rotor 2 of the generator and the housing of the nacelle 1.

In this first embodiment the air is taken from within the nacelle 1. An aerosol filter 7 is connected to the fan 14 and/or the air channel 15 to filter aerosols like dust, salt, moisture, pollen, or sand form the air.

The air in the cavity 4 is kept under a higher pressure then the ambient air, to force the air to flow through the ducts 16 into the air gap 17.

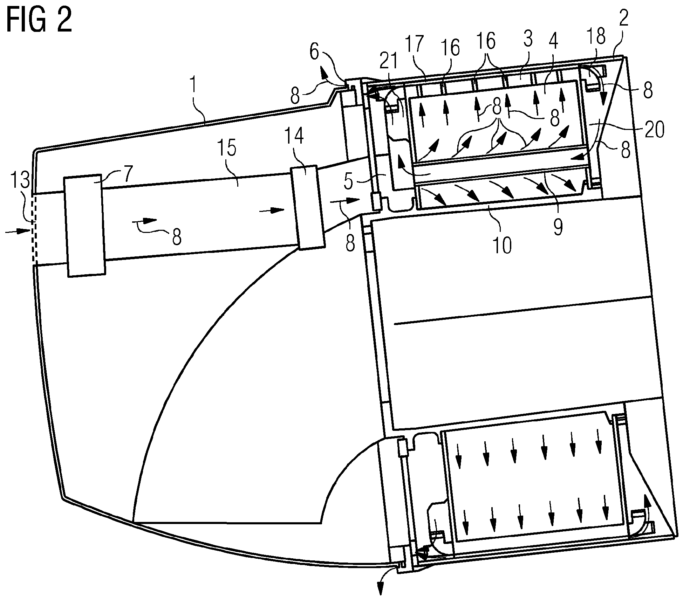

FIG 2 shows a second embodiment of the cooling system.

FIG 2 shows a second embodiment of the cooling system. The air used for cooling the generator is taken from outside of the nacelle 1. The nacelle 1 comprises an air inlet 13 at the back side 12 of the nacelle 1. An air channel 15 connect the air inlet 13 with the filter 7, the fan 14, and with the air inlet 5 of the cavity 4.

From the cavity 4 the air flow 8 goes through ducts 16 through the stator into the air gap 17, from there along the air gap 17, to the winding overhangs 18, and to an air outlet 6 between the rotor 2 of the generator and the housing of the nacelle 1.

An aerosol filter 7 is connected to the air inlet 13 and/or the air channel 15 to filter dust, salt, pollen, moisture, or sand form the air.

The air outlet 6 comprises a sealing. This sealing can be a labyrinth-sealing for example. The air inside the cooling system is kept at a higher pressure then the air surrounding the wind turbine. The air flow 8 from the inside of the cooling system flows through the sealing and exits the wind turbine.

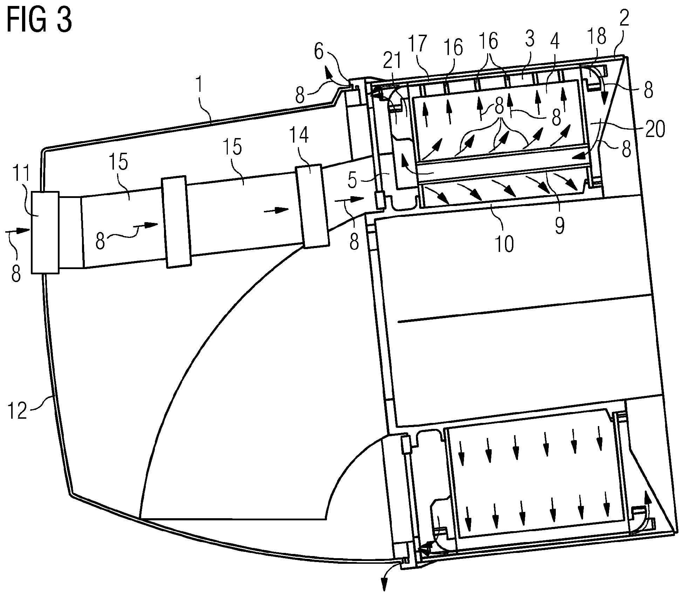

FIG 3 shows a third embodiment of the cooling system.

The nacelle 1 comprises an opening in the back side 12 of the nacelle 1. The opening is used as an air inlet 13 for the cooling system. The air inlet comprises a dehumidifier 11 that is arranged at the opening in the back side 12 of the nacelle 1.

The air inlet 13 is connected to an air channel 15. A fan 14 is arranged in the air channel 15 to move the air from outside of the nacelle 1 through the dehumidifier 11 and the air channel 15. The air flow 8, generated by the fan 14, is forced through the air inlet 5 into the cavity 4.

An additional filter, for example an aerosol filter, for dust, salt, sand, moisture or pollen, can be connected to the air channel 15.

The air pressure in the cavity 4 is kept on a higher level than the pressure of the air surrounding the wind turbine.

The cavity 4 is connected by ducts 16 with the air gap 17, so that the air in the cavity 4 flows through the duct 16 into the air gap 17. The air gap comprises a first end that is present at the first side 20 of the generator, and the air gap comprises a second end that is present at the second side 21 of the generator.

The air flows along the air gap 17 towards both end of the air gap 17 and collects at the first side 20 and the second side 21.

The first side 20 of the generator is connected to the second side 21 by a duct 9 in a way that the air from the first side 20 flows through the duct 9 towards the second side 21 of the generator. The cavits is separated from the first side 20 and the second side 21 of the generator by a wall on each side.
The walls connect the stator 3 and the shaft 10.

The first end of the duct 9 is connected to an opening in the wall at the first side 20 of the generator. The second end of the duct 9 is connected to an opening in the wall at the second side 21 of the generator. The duct 9 is arranged between the opening in the wall on the first side 20 and the opening in the wall on the second side 21 so that the duct leads through the cavity 4.

The air flow 8 from the air gap 17 collects at the second side 21 of the generator. An air outlet 6 is arranged between the housing of the nacelle 1 and the rotor 2 of the generator. The air flow exits the wind turbine at the air outlet 6.

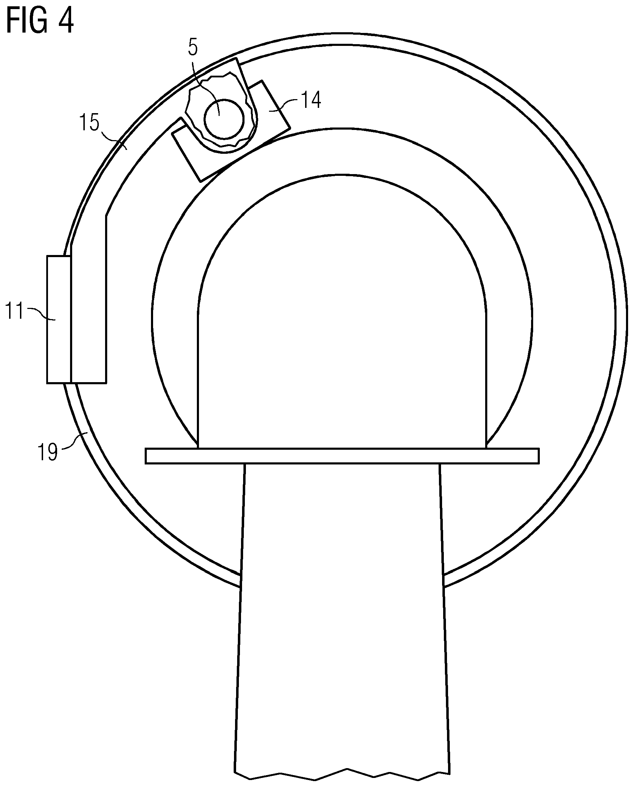

FIG 4 shows an air inlet at the side of the nacelle.

FIG 4 shows a cut through the nacelle 1 of a wind turbine.
FIG 4 shows a view from the back side of the nacelle 1 into the nacelle 1 towards the generator of the wind turbine.

The nacelle 1 comprises a side wall 19. An air inlet is arranged in the side wall 19 of the nacelle 1. A dehumidifier 11 is arranged at the air inlet. An air channel 15 leads along the inner side of the housing of the nacelle 1. The air cannel 15 comprises a fan 14 that forces the air through the air inlet 5 into the cavity in the generator of the wind turbine.

The illustration in the drawings is in schematic form. It is noted that in different figures, similar or identical elements are provided with the same reference signs.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also elements described in association with different embodiments may be combined. It should also be noted that reference signs in the claims should not be construed as limiting the scope of the claims.

## Claims

1. Wind turbine generator cooling system for a direct driven wind turbine
- whereby the electrical generator comprises a stator (3), a rotor (2), and an air gap (17) between the stator (3) and the rotor (2), and the rotor (2) is rotatable in respect to the stator around an axis of rotation,
- whereby the generator comprises a cavity (4), that is abutting on the stator (3) in a radial direction,
- whereby a fan (14) is connected to the cavity (4), so that the fan (14) moves air through the cavity (4) to cool the generator,
- whereby a duct (9) extends through the cavity (4) in a mainly axial direction from a first side (20) of the generator to a second side (21) of the generator to allow the air that moves through the cavity (4), that cools the generator, and that collects at least partially at the first side (20) of the generator, to flow from the first side (20) of the generator to the second side (21) of the generator to exit the generator
- whereby the rotor is arranged radially outward of the stator (3), and the stator (3) is attached to a main shaft (10) of the wind turbine, and the cavity (4) is arranged between the stator (3) and the main shaft (10)
- whereby the wind turbine comprises a nacelle (1) and the electrical generator is attached to the nacelle (1),
- whereby the nacelle comprises a housing,
**characterized in that** an air outlet (6) connects the interior of the generator with the exterior of the wind turbine,
- whereby the air outlet (6) is arranged between the housing of the nacelle (1) and the rotor (2) of the generator, to allow the warm air from inside the generator to exit the wind turbine.

2. Wind turbine generator cooling system, according to claim 1, **characterized in that** the cavity (4) comprises a first wall to separate the interior of the cavity (4) from a first side (20) of the generator, and a second wall to separate the interior of the cavity (4) from a second side (21) of the generator, whereby the first wall and the second wall define the axial ends of the cavity (4), and the duct (9) extends through the interior of the cavity (4) from an opening in the first wall of the cavity (4) to an opening in the second wall of the cavity (4).

3. Wind turbine generator cooling system, according to one of the preceding claims, **characterized in that** the stator (3) comprises a plurality of ducts (16) that connect the cavity (4) with the air gap (17) in a way that the air from the cavity (4) flows into the air gap (17), and along the air gap to the first side (20) and to the second side (21) of the generator.

4. Wind turbine generator cooling system, according to one of the preceding claims, **characterized in that** the air outlet (6) comprises a sealing.

5. Wind turbine generator cooling system, according to one of the preceding claims, **characterized in that** an air inlet duct (15) is connected to the fan (14) and that a filter (7) is attached to the air inlet duct (15) so that the air is filtered before it is blown into the cavity (4).

6. Wind turbine generator cooling system, according to claim 5, **characterized in that** the filter (7) is an aerosol filter.

7. Wind turbine generator cooling system, according to one of the preceding claims, **characterized in that** the housing of the nacelle (1) comprises an air inlet (13) for air to enter the nacelle (1).

8. Wind turbine generator cooling system according to claim 7, **characterized in that** the air inlet (13) to the nacelle (1) comprises a dehumidifier (11) and/or a filter (7) for aerosols.

9. Wind turbine generator cooling system, according to claim 7, **characterized in that** the air inlet (13) of the nacelle (1) is arranged in the back wall (12) of the housing of the nacelle (1).

10. Wind turbine generator cooling system, according to claim 7, **characterized in that** the air inlet (13) of the nacelle (1) is arranged at a side (19) of the housing of the nacelle (1).

11. Wind turbine generator cooling system, according to claim 3, **characterized in that** the plurality of ducts (16) in the stator (3) is arranged in the lamination plates of the generator.

12. Wind turbine generator cooling system, according to claim 11, **characterized in that** the plurality of ducts (16) in the stator (3) are gaps between at least two stacks of lamination plates of the generator.

13. Use of the arrangement according to one of the preceding claims for cooling a generator of a wind turbine.

## Patentansprüche

1. Windturbinengenerator-Kühlsystem für eine Windenergieanlage mit Direktantrieb,
- wobei der elektrische Generator einen Stator (3), einen Rotor (2) und einen Luftspalt (17) zwischen dem Stator (3) und dem Rotor (2) umfasst und der Rotor (2) bezüglich des Stators um eine Drehachse drehbar ist,
- wobei der Generator einen Hohlraum (4) umfasst, welcher an den Stator (3) in einer radialen Richtung angrenzt,
- wobei ein Lüfter (14) mit dem Hohlraum (4) verbunden ist, sodass der Lüfter (14) Luft durch den Hohlraum (4) bewegt, um den Generator zu kühlen,
- wobei ein Kanal (9) sich durch den Hohlraum (4) hindurch in einer hauptsächlich axialen Richtung von einer ersten Site (20) des Generators zu einer zweiten Seite (21) des Generators erstreckt, um zu ermöglichen, dass die Luft, welche sich durch den Hohlraum (4) bewegt, welche den Generator kühlt und welche sich wenigstens teilweise auf der ersten Seite (20) des Generators sammelt, von der ersten Seite (20) des Generators zu der zweiten Seite (21) des Generators strömt, um aus dem Generator auszutreten,
- wobei der Rotor radial außerhalb des Stators (3) angeordnet ist und der Stator (3) an einer Hauptwelle (10) der Windenergieanlage befestigt ist und der Hohlraum (4) zwischen dem Stator (3) und der Hauptwelle (10) angeordnet ist,
- wobei die Windenergieanlage eine Gondel (1) umfasst und der elektrische Generator an der Gondel (1) befestigt ist,
- wobei die Gondel ein Gehäuse umfasst,
**dadurch gekennzeichnet, dass** ein Luftauslass (6) das Innere des Generators mit dem Äußeren der Windenergieanlage verbindet,
- wobei der Luftauslass (6) zwischen dem Gehäuse der Gondel (1) und dem Rotor (2) des Generators angeordnet ist, um zu ermöglichen, dass die warme Luft aus dem Inneren des Generators aus der Windenergieanlage austritt.

2. Windturbinengenerator-Kühlsystem nach Anspruch 1, **dadurch gekennzeichnet, dass** der Hohlraum (4) eine erste Wand, um das Innere des Hohlraums (4) von einer ersten Seite (20) des Generators zu trennen, und eine zweite Wand, um das Innere des Hohlraums (4) von einer zweiten Seite (21) des Generators zu trennen, umfasst, wobei die erste Wand und die zweite Wand die axialen Enden des Hohlraums (4) definieren und der Kanal (9) sich durch das Innere des Hohlraums (4) hindurch von einer Öffnung in der ersten Wand des Hohlraums (4) zu einer Öffnung in der zweiten Wand des Hohlraums (4) erstreckt.

3. Windturbinengenerator-Kühlsystem nach einem der vorhergehenden Ansprüche, **dadurch gekennzeichnet, dass** der Stator (3) mehrere Kanäle (16) umfasst, welche den Hohlraum (4) mit dem Luftspalt (17) derart verbinden, dass die Luft aus dem Hohlraum (4) in den Luftspalt (17) hinein und entlang des Luftspalts zu der ersten Seite (20) und zu der zweiten Seite (21) des Generators strömt.

4. Windturbinengenerator-Kühlsystem nach einem der vorhergehenden Ansprüche, **dadurch gekennzeichnet, dass** der Luftauslass (6) eine Dichtung umfasst.

5. Windturbinengenerator-Kühlsystem nach einem der vorhergehenden Ansprüche, **dadurch gekennzeichnet, dass** ein Lufteinlasskanal (15) mit dem Lüfter (14) verbunden ist, und dass ein Filter (7) an dem Lufteinlasskanal (15) befestigt ist, sodass die Luft gefiltert wird, bevor sie in den Hohlraum (4) geblasen wird.

6. Windturbinengenerator-Kühlsystem nach Anspruch 5, **dadurch gekennzeichnet, dass** das Filter (7) ein Aerosolfilter ist.

7. Windturbinengenerator-Kühlsystem nach einem der vorhergehenden Ansprüche, **dadurch gekennzeichnet, dass** das Gehäuse der Gondel (1) einen Lufteinlass (13) umfasst, damit Luft in die Gondel (1) eintritt.

8. Windturbinengenerator-Kühlsystem nach Anspruch 7, **dadurch gekennzeichnet, dass** der Lufteinlass (13) der Gondel (1) einen Entfeuchter (11) und/oder ein Filter (7) für Aerosole umfasst.

9. Windturbinengenerator-Kühlsystem nach Anspruch 7, **dadurch gekennzeichnet, dass** der Lufteinlass (13) der Gondel (1) in der Rückwand (12) des Gehäuses der Gondel (1) angeordnet ist.

10. Windturbinengenerator-Kühlsystem nach Anspruch 7, **dadurch gekennzeichnet, dass** der Lufteinlass (13) der Gondel (1) an einer Seite (19) des Gehäuses der Gondel (1) angeordnet ist.

11. Windturbinengenerator-Kühlsystem nach Anspruch 3, **dadurch gekennzeichnet, dass** die mehreren Kanäle (16) in dem Stator (3) in den Lamellen des Generators angeordnet sind.

12. Windturbinengenerator-Kühlsystem nach Anspruch 11, **dadurch gekennzeichnet, dass** die mehreren Kanäle (16) in dem Stator (3) Zwischenräume zwischen wenigstens zwei Stapeln von Lamellen des Generators sind.

13. Verwendung der Anordnung nach einem der vorhergehenden Ansprüche zum Kühlen eines Generators einer Windenergieanlage.

## Revendications

1. Système de refroidissement d'un générateur de turbine éolienne destiné à une turbine éolienne à entraînement direct :
- le générateur électrique comprenant un stator (3), un rotor (2) et un espace d'air (17) entre le stator (3) et le rotor (2), et le rotor (2) peut tourner par rapport au stator autour d'un axe de rotation,
- le générateur comprenant une cavité (4), qui vient buter contre le stator (3) dans une direction radiale,
- un ventilateur (14) est relié à la cavité (4), de sorte que le ventilateur (14) déplace l'air à travers la cavité (4) en vue de refroidir le générateur,
- un conduit (9) s'étendant à travers la cavité (4) dans une direction principalement axiale à partir d'un premier côté (20) du générateur vers un second côté (21) du générateur pour permettre à l'air de se déplacer à travers la cavité (4), qui refroidit le générateur, et qui collecte au moins partiellement au niveau du premier côté (20) du générateur, en vue de s'écouler du premier côté (20) du générateur au second côté (21) du générateur pour sortir du générateur,
- le rotor étant disposé radialement vers l'extérieur du stator (3), et le stator (3) est fixé à un axe principal (10) de la turbine éolienne, et la cavité (4) est disposée entre le stator (3) et l'axe principal (10),
- la turbine éolienne comprenant une nacelle (1) et le générateur électrique est fixé à la nacelle (1),
- la nacelle comprenant un boîtier,
**caractérisé en ce que** la sortie d'air (6) relie l'intérieur du générateur à l'extérieur de la turbine éolienne,
- la sortie d'air (6) est disposée entre le boîtier de la nacelle (1) et le rotor (2) du générateur, pour permettre à l'air chaud venant de l'intérieur du générateur de sortir de la turbine éolienne.

2. Système de refroidissement d'un générateur de turbine éolienne selon la revendication 1, **caractérisé en ce que** la cavité (4) comprend une première paroi pour séparer l'intérieur de la cavité (4) d'un premier côté (20) du générateur, et une seconde paroi pour séparer l'intérieur de la cavité (4) d'un second côté (21) du générateur, la première paroi et la seconde paroi définissant les extrémités axiales de la cavité (4), et le conduit (9) s'étend à travers l'intérieur de la cavité (4) d'une ouverture dans la première paroi de la cavité (4) à une ouverture dans la seconde paroi de la cavité (4).

3. Système de refroidissement d'un générateur de turbine éolienne selon l'une des revendications précédentes, **caractérisé en ce que** le stator (3) comprend une pluralité de conduits (16) qui relient la cavité (4) à l'espace d'air (17) de sorte que l'air provenant de la cavité (4) s'écoule dans l'espace d'air (17), et le long de l'espace d'air vers le premier côté (20) et vers le second côté (21) du générateur.

4. Système de refroidissement d'un générateur de turbine éolienne selon l'une des revendications précédentes, **caractérisé en ce que** la sortie d'air (6) comprend une étanchéité.

5. Système de refroidissement d'un générateur de turbine éolienne selon l'une des revendications précédentes, **caractérisé en ce qu**'un conduit d'entrée d'air (15) est relié au ventilateur (14) et qu'un filtre (7) est fixé au conduit d'entrée d'air (15) de sorte que l'air est filtré avant qu'il ne soit soufflé dans la cavité (4).

6. Système de refroidissement d'un générateur de turbine éolienne selon la revendication 5, **caractérisé en ce que** le filtre (7) est un filtre d'aérosol.

7. Système de refroidissement d'un générateur de turbine éolienne selon l'une des revendications précédentes, **caractérisé en ce que** le boîtier de la nacelle (1) comprend une entrée d'air (13) permettant à l'air d'entrer dans la nacelle (1).

8. Système de refroidissement d'un générateur de turbine éolienne selon la revendication 7, **caractérisé en ce que** l'entrée d'air (13) vers la nacelle (1) comprend un déshumidificateur (11) et/ou un filtre (7) pour aérosols.

9. Système de refroidissement d'un générateur de turbine éolienne selon la revendication 7, **caractérisé en ce que** l'entrée d'air (13) de la nacelle (1) est disposée dans la paroi arrière (12) du boîtier de la nacelle (1).

10. Système de refroidissement d'un générateur de turbine éolienne selon la revendication 7, **caractérisé en ce que** l'entrée d'air (13) de la nacelle (1) est disposée au niveau d'un côté (19) du boîtier de la nacelle (1).

11. Système de refroidissement d'un générateur de turbine éolienne selon la revendication 3, **caractérisé en ce que** la pluralité de conduits (16) dans le stator (3) est disposée dans les plaques de stratification du générateur.

12. Système de refroidissement d'un générateur de turbine éolienne selon la revendication 11, **caractérisé en ce que** la pluralité de conduits (16) dans le stator (3) forme des intervalles entre au moins deux piles de plaques de stratification du générateur.

13. Utilisation de l'agencement selon l'une des revendications précédentes permettant le refroidissement d'un générateur d'une turbine éolienne.
